# EUROPÄISCHE PATENTSCHRIFT

(11) **EP 0 579 992 B1**
(45) Veröffentlichungstag und Bekanntmachung des Hinweises auf die Patenterteilung: **15.01.1997**
(21) Anmeldenummer: 93110512.6
(22) Anmeldetag: 01.07.1993
(51) Int. Cl.: B29C 47/08

(54) **Vorrichtung zum Vorformen von plastifiziertem Kunststoffmaterial**
Apparatus for preforming plasturized plastic material
Dispositif de préformage de matière plastique à l'état plastique

(30) Priorität: 22.07.1992 DE 4224141
(43) Veröffentlichungstag der Anmeldung: 26.01.1994
(73) Patentinhaber: HOECHST AKTIENGESELLSCHAFT, 65926 Frankfurt am Main (DE)
(72) Erfinder: Henning, Jürgen, D-6200 Wiesbaden (DE); Klein, Norbert, Dr., D-6231 Sulzbach/Taunus (DE); Hucke, Heinrich, D-4950 Minden (DE)

(56) Entgegenhaltungen:
- EP-A- 0 484 869
- DE-U- 8 431 941
- FR-A- 2 193 705
- GB-A- 1 081 614

## Beschreibung

Die Erfindung betrifft eine Vorrichtung zum Vorformen von plastifiziertem Kunststoffmaterial, enthaltend bewegbare Formelemente. Vorrichtungen der genannten Art sind bekannt, beispielsweise aus der EP-A-0 484 869 oder aus der FR-A-2 193 705. Beide Dokumente offenbaren bewegbare Formelemente - drehbar gelagerte Köpfe - die einer Plastifiziereinrichtung als Düse nachgeschaltet sind und das plastifizierte Kunststoffmaterial in eine zur Weiterverarbeitung geeignete Form bringen.

Die Möglichkeit, plastifiziertes Kunststoffmaterial, insbesondere wenn es mit Fasern verstärkt ist, nach dem Verlassen solcher Düsen durch Pressen zu verarbeiten, wird durch die Form des plastifizierten Materials eingeschränkt. Grobe Abweichungen von der Preßformkavität in Bezug auf Geometrie und Menge führen entweder dazu, daß die Form nur unvollständig gefüllt wird und Restmengen in der Ausstoßdüse der Plastifiziereinrichtung bleiben und dort abkühlen. Die Restmenge kann zum Verpressen nicht mehr verwendet werden, weil in der plastifizierten Masse eine Trennaht entsteht, die nach dem Verpressen zu Bindenähten im Preßteil führt, die dieses mechanisch schwächen.

Aufgabe der Erfindung ist es, die bekannte Vorrichtung dahingehend zu verbessern, daß die genannten Nachteile entfallen.

Die Aufgabe wird durch eine Vorrichtung der eingangs genannten Art gelöst, die dadurch gekennzeichnet ist, daß die bewegbaren Formelemente zwei drehbar gelagerte Kalibrierbacken sind und daß zwischen zwei parallel angeordnete Holmen eine Form, die durch zwei stationär angeordnete Platten und die zwei drehbar gelagerten Kalibrierbacken gebildet wird, und zwei Hebel mit Antriebseinrichtungen angeordnet sind, wobei jeweils an einem Ende der Hebel eine der Kalibrierbacken und an ihrem anderen Ende eine der Antriebseinrichtungen befestigt ist, und wobei die Hebel, die Antriebseinrichtungen und die stationären Platten mit den Holmen verbunden sind.

Bei einer Ausgestaltung der Vorrichtung sind die Kalibrierbacken mit Profilierungsrinnen und die Holme mit Einrichtungen zum Befestigen der Vorrichtung an einer Plastifiziervorrichtung versehen. Weitere Ausgestaltungen sind in den Unteransprüchen angegeben.

Die durch die Erfindung erreichten Vorteile sind im wesentlichen darin zu sehen, daß sich Vorformlinge aus plastifiziertem, langfaserverstärktem Kunststoffmaterial beliebiger Geometrie ohne Umformreste herstellen lassen.

Im folgenden wird die Erfindung anhand von lediglich einen Ausführungsweg darstellenden Zeichnungen näher erläutert.

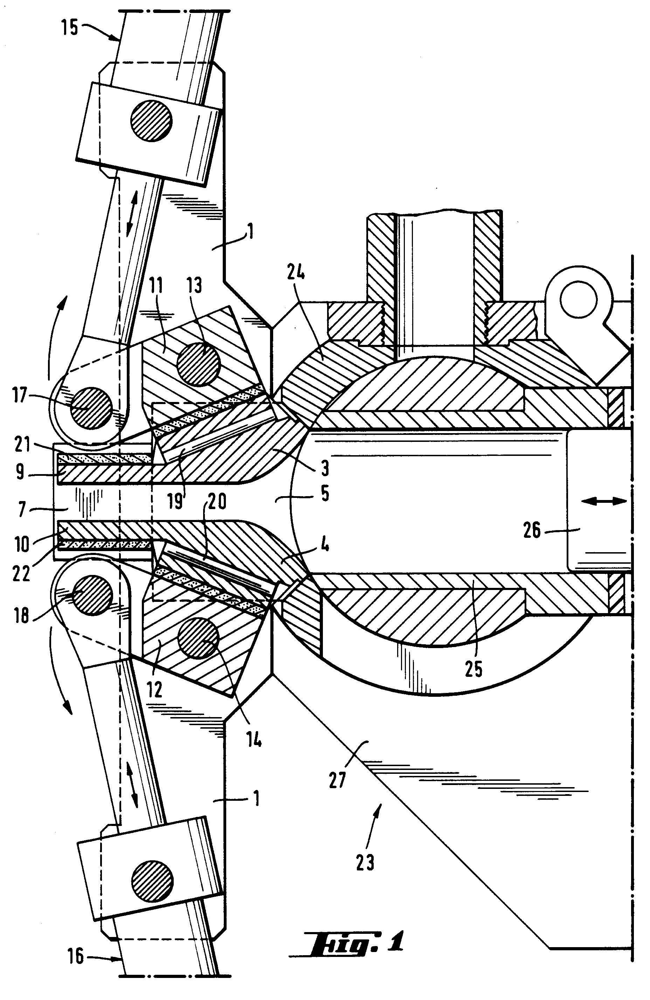

Es zeigt
Figur 1 eine Seitenansicht der Vorrichtung, teilweise geschnitten;

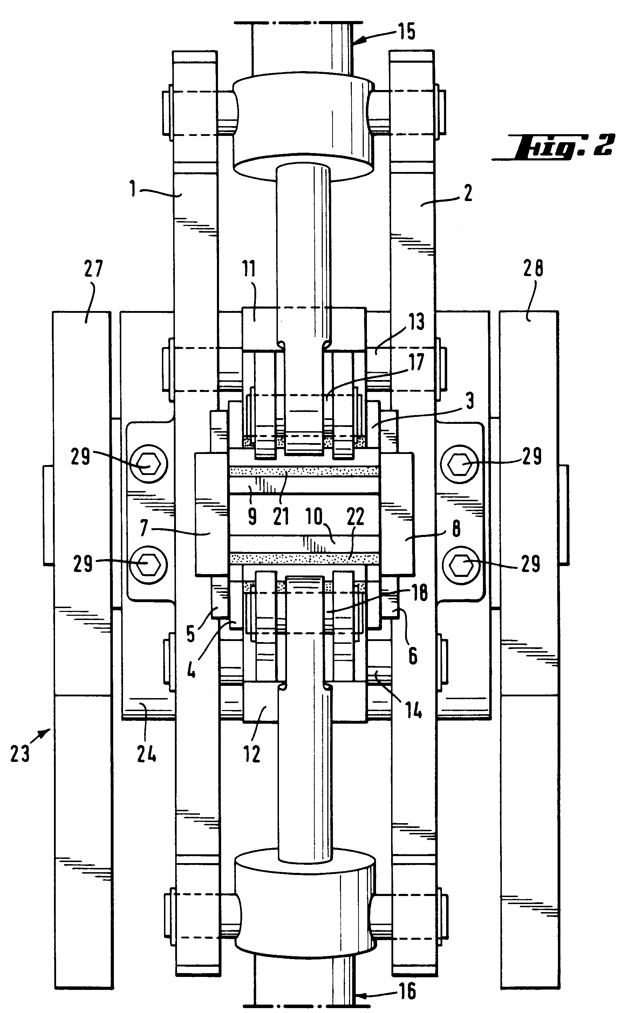

Figur 2 eine Frontansicht der Vorrichtung und
Figur 3 eine Vorrichtung gemäß Fig. 1 in geöffnetem Zustand.

Zwischen zwei parallel angeordneten Holmen 1, 2 ist eine Form zum Herstellen von Vorformlingen aus plastifiziertem Kunststoffmaterial angeordnet. Die Form wird durch zwei sich gegenüber stehende, drehbar gelagerte Kalibrierbacken 3,4 und zwei diese begrenzende stationären Platten 5,6 gebildet. Die stationären Platten 5,6 sind an den Holmen 1,2 befestigt und weisen in Fließrichtung des Vorformlings Verlängerungen 7,8 auf. Die Kalibrierbacken 3,4 weisen ebenfalls Verlängerungen 9,10 auf. Zwischen den Holmen 1,2 sind ferner zwei Hebel 11,12 über Gelenke 13,14 drehbar angeordnet. Am drehbar gelagerten Ende der Hebel 11,12 ist jeweils eine der Kalibrierbacken 3,4 befestigt. Das freie Ende der Hebel 11,12 ist jeweils mit einer Antriebseinrichtung 15,16 über Gelenke 17,18 verbunden. Die Kalibrierbacken 3,4 und/oder die stationären Platten 5,6 können mit Profilrinnen versehen sein (nicht dargestellt). So lassen sich Vorformlinge mit z.B. sternförmigem, rechteckigem, quadratischem, dreieckigem, ovalem oder sonstigem beliebigem Querschnitt herstellen. Die Kalibrierbacken 3,4 können mit Heizeinrichtungen 19,20 versehen sein; ihre Verlängerungen 9,10 mit Wärmeschutzplatten 21,22, die ebenfalls mit Heizeinrichtungen (nicht dargestellt) versehen sein können. 23 deutet die Plastifiziereinrichtung an, und zwar das Gehäuse 24 mit einem darin drehbar gelagerten Ausstoßzylinder 25 mit Ausstoßkolben 26 und den Maschinenteilen 27,28, an denen die erfindungsgemäße Vorrichtung befestigt ist (Verschraubung 29).

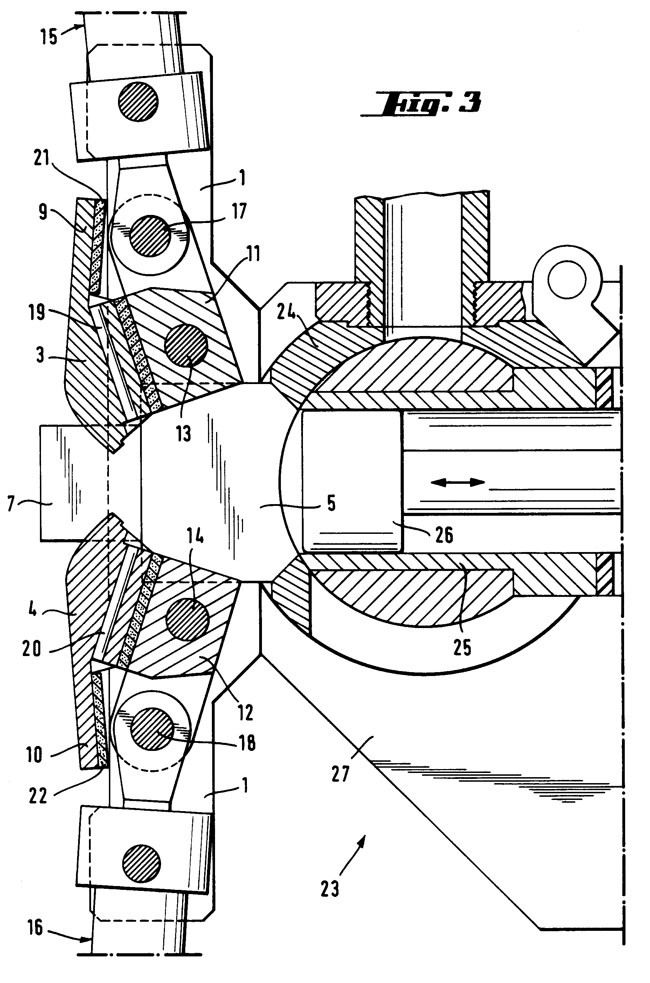

Die dosierte, plastifizierte Masse wird mit dem Ausstoßkolben 26 aus dem Ausstoßzylinder 25 gedrückt. Dem dabei an den formgebenden Elementen auftretenden Druck wird durch die Antriebseinrichtungen 15,16 für die Kalibrierbacken 3,4 gegengewirkt, so daß die gewünschte Geometrie des Plastifikats erzeugt wird. Damit keine Reste in der formgebenden Form verbleiben, klappen am Ende des Ausstoßvorgangs die Kalibrierbacken 3,4 auseinander und ziehen das Plastifikat mit. Die durch die Hebel 11,12 bewirkte Schwenkbewegung zieht das Material mit sich und formt auch das Ende der Charge in der gewünschten Geometrie. Auf diese Weise wird das gesamte dosierte Material als Ganzes umgeformt. Der wesentliche Vorteil dieser Vorgehensweise ist die Erzeugung der gewünschten Geometrie ohne Umformreste. Zwecks einfacher Reinigung lassen sich die beiden formgebenden Kalibrierbacken 3,4 auch ganz auseinanderklappen (Figur 3).

## Patentansprüche

1. Vorrichtung zum Vorformen von plastifiziertem Kunststoffmaterial, enthaltend bewegbare Formelemente, dadurch gekennzeichnet, daß die bewegbaren Formelemente zwei drehbar gelagerte Kalibrierbacken (3, 4) sind und daß zwischen zwei parallel angeordnete Holmen (1, 2) eine Form, die durch zwei stationär angeordnete Platten (5, 6) und die zwei drehbar gelagerten Kalibrierbacken (3, 4) gebildet wird, und zwei Hebel (11, 12) mit Antriebseinrichtungen (15, 16) angeordnet sind, wobei jeweils an einem Ende der Hebel (11, 12) eine der Kalibrierbacken (3, 4) und an ihrem anderen Ende eine der Antriebseinrichtungen (15, 16) befestigt ist, und wobei die Hebel (11, 12), die Antriebseinrichtungen (15, 16) und die stationären Platten (5, 6) mit den Holmen (1, 2) verbunden sind.

2. Vorrichtung nach Anspruch 1, dadurch gekennzeichnet, daß die Kalibrierbacken (3,4) Profilierungsrinnen aufweisen.

3. Vorrichtung nach Anspruch 1, dadurch gekennzeichnet, daß die Holme (1,2) Einrichtungen (29) zum Befestigen an einer Plastifiziereinrichtung aufweisen.

4. Vorrichtung nach Anspruch 1, dadurch gekennzeichnet, daß die Kalibrierbacken (3,4) mit Heizeinrichtungen (19,20) versehen sind.

5. Vorrichtung nach Anspruch 1, dadurch gekennzeichnet, daß die Kalibrierbacken (3,4) und die stationär angeordneten Platten (5,6) Verlängerungsteile (7,8,9,10) aufweisen.

## Claims

1. An apparatus for pre-shaping plasticated plastics material, containing movable shaping elements, wherein the movable shaping elements are two rotatably mounted calibration jaws (3, 4) and wherein a mold formed by two plates (5, 6) arranged so as to be stationary and by the two rotatably mounted calibration jaws (3, 4) and two levers (11, 12) with drive devices (15, 16) are arranged between two columns (1, 2) which are arranged in parallel, one of the calibration jaws (3, 4) in each case being fastened to one end of the levers (11, 12) and one of the drive devices (15, 16) in each case being fastened to their other end, and the levers (11, 12), the drive devices (15,16) and the stationary plates (5, 6) being connected to the columns (1, 2).

2. The apparatus as claimed in claim 1, wherein the calibration jaws (3, 4) have profiling grooves.

3. The apparatus as claimed in claim 1, wherein the columns (1, 2) have devices (29) for fastening to a plastication device.

4. The apparatus as claimed in claim 1, wherein the calibration jaws (3, 4) are provided with heating devices (19, 20).

5. The apparatus as claimed in claim 1, wherein the calibration jaws (3, 4) and the plates (5, 6) arranged so as to be stationary have extension parts (7, 8, 9, 10).

## Revendications

1. Dispositif de préformage d'un matériau plastique plastifié, contenant des éléments de moule mobiles, caractérisé en ce que les éléments de moule mobiles sont constitués de deux mâchoires de calibrage (3, 4), logées en rotation, et qu'entre deux traverses (1, 2) disposées parallèlement sont disposés un moule, qui est formé de deux plaques (5, 6), disposées en position fixe, et de deux mâchoires de calibrage (3, 4), logées en rotation, ainsi que deux leviers (11, 12) avec des dispositifs d'entraînement (15, 16), auquel cas l'une des mâchoires de calibrage (3, 4) est fixée à une extrémité de chacun des leviers (11, 12), et l'un des dispositifs d'entraînement (15, 16) est fixé à leur autre extrémité, et où les leviers (11, 12), les dispositifs d'entraînement (15, 16) et les plaques fixes (5, 6) sont reliés aux traverses (1, 2).

2. Dispositif selon la revendication 1, caractérisé en ce que les mâchoires de calibrage (3, 4) comportent des gorges de profilage.

3. Dispositif selon la revendication 1, caractérisé en ce que les traverses (1, 2) comportent des moyens (29) destinés à une fixation à un dispositif de plastification.

4. Dispositif selon la revendication 1, caractérisé en ce que les mâchoires de calibrage (3, 4) sont pourvues de dispositifs de chauffage (19, 20).

5. Dispositif selon la revendication 1, caractérisé en ce que les mâchoires de calibrage (3, 4) et les plaques (5, 6) en position fixe comportent des pièces de prolongement (7, 8, 9, 10).
